# EUROPEAN PATENT SPECIFICATION

(11) **EP 2 062 825 B1**
(45) Date of publication and mention of the grant of the patent: **01.09.2010**
(21) Application number: 07022761.6
(22) Date of filing: 23.11.2007
(51) Int. Cl.: B65D 6/08

(54) **Bamboo container suitable for mass production**
Bambusbehälter für Massenproduktion
Récipient en bambou approprié pour une production en série

(43) Date of publication of application: 27.05.2009
(73) Proprietor: Wang, Wen-Tsan, Taipei City (TW)
(72) Inventor: Wang, Wen-Tsan, Taipei City (TW)
(74) Representative: Ruschke, Hans Edvard

(56) References cited:
- EP-A- 1 442 988
- DE-C- 474 114
- US-A- 1 358 581
- US-A- 5 938 057
- US-B1- 6 419 103

## Description

### BACKGROUND OF THE INVENTION

### 1. Field of the Invention:

The present invention relates to a bamboo container according to the preamble of claim 1 that is suitable for mass production.

### 2. Description of the Related Art:

Various materials including ceramics, glass, wood, plastics, stainless steel, and etc. may be used for making tables, chairs, cabinets, storage containers, and many other furniture. For the advantage of showing a sense of antique beauty, furniture and storage containers made of wooden and bamboo materials are widely invited.

A conventional bamboo furniture is known comprising a frame structure and a plurality of wall panels formed of bamboo strips by weaving. These bamboo panels have open spaces, and are fastened to the frame structure by an adhesive or by means of binding wires There is known another structure of bamboo furniture in which the bamboo panels are formed of transverse bamboo slats and longitudinal bamboo slats, and the transverse and longitudinal bamboo slats are fastened together by rattan cords. The fabrication of this structure of bamboo furniture requires much time and labor, and therefore the cost of this structure of bamboo furniture is high.

There is also known another design of bamboo storage container, which comprises a top frame, a bottom frame, and a plurality of bamboo slats connected between the top frame and the bottom frame. The bamboo slats have the respectively top and bottom ends respectively fastened to respective bottom mounting holes on the top frame and respective top mounting holes on the bottom frame. Because the bamboo slats are flexible, it requires much time and labor to fasten the bamboo slats to the top frame and the bottom frame. Further, the top frame and the bottom frame are each formed of four bamboo slats, and the four bamboo slats are connected to one another end to end to form a rectangular open frame. The fabrication of this design of bamboo storage container also requires much time and labor. Therefore, this design of bamboo storage container is not suitable for mass production. Further, the top frame and the bottom frame have sharp angles, having less sense of beauty.

A bamboo storage container with the features of the preamble of claim 1 is disclosed in EP 1 442988 A1

### SUMMARY OF THE INVENTION

It is therefore the main object of the present invention to provide a bamboo container, which shows a sense of unique beauty and, is suitable for mass production.

The present invention is defined by appended claim 1. Preferred embodiments of the invention are defined by dependent claims 2-5.

The top open frame and the bottom open frame can respectively be comprised of a plurality of frame elements prepared from bamboo slats processed through a hot press.

The reinforcing middle open frame is attached to the bamboo slats at an inner side and spaced between the top open frame and the bottom open frame, and a cord member can be fastened to the bamboo slats and the reinforcing middle open frame to affix the reinforcing middle open frame to the bamboo slats.

The top open frame can be made having a diameter relatively greater than the bottom open frame, and the bamboo slats can be smoothly arched and curved inwards toward the inside of the bamboo container or outwards toward the outside of the bamboo container.

### BRIEF DESCRIPTION OF THE DRAWINGS

FIG. 1 is an exploded view showing the basic structure of a bamboo container.
FIG. 2 is an exploded view showing an alternate form of the basic structure of bamboo container.
FIG. 3 is an elevational view of a bamboo container of a first embodiment of the present invention.
FIG. 4 is an elevational view of a bamboo container of a second embodiment of the present invention.
FIG. 5 is an elevational view of a bamboo container of a third embodiment of the present invention.
FIG. 6 is an elevational view of a bamboo container of a fourth embodiment of the present invention.
FIG. 7 is an elevational view of a bamboo container of a fifth embodiment.
FIG. 8 is an elevational view of a bamboo container of a sixth embodiment.
FIG. 9 is an elevational view of a bamboo container of a seventh embodiment.

### DETAILED DESCRIPTION OF THE PREFERRED EMBODIMENT

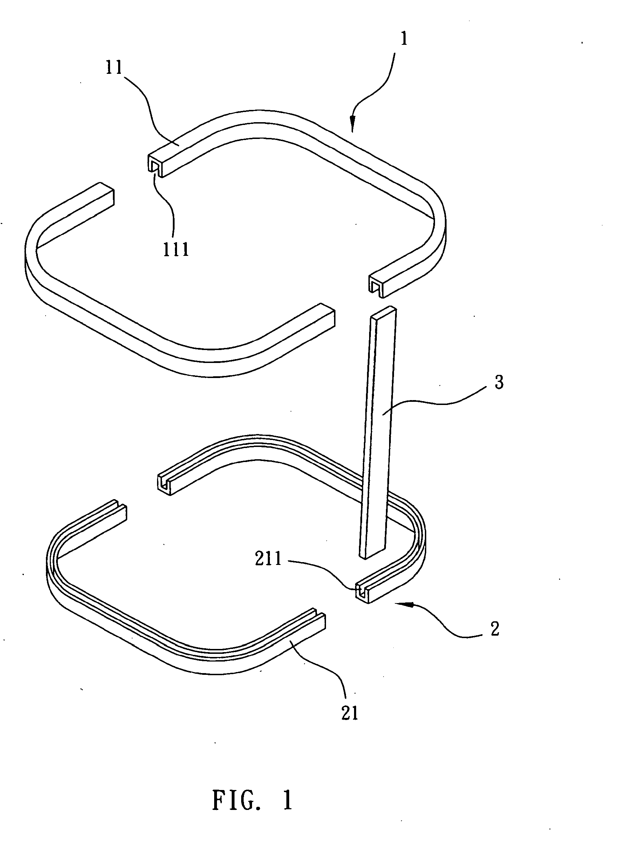

Referring to FIG. 1, a bamboo container is shown comprising a top frame **1**, a bottom frame **2,** and a plurality of bamboo slats **3** connected between the top frame 1 and the bottom frame **2.** The top frame **1** is an open frame comprised of a plurality of top frame elements **11** that connected to one another. The top frame elements **11** are respectively made of a bamboo material and treated with heat and pressure in a mold, showing a U-shaped cross section. Further, the top frame elements **11** are smoothly curved. An adhesive, plug joint, fastening members, or any of a variety of other fastening method can be used to connect the top frame elements **11.** When the top frame elements **11** are fixedly connected to one another into the loop-like top frame **1,** an endless locating groove **111** is defined in the bottom side of the top frame **1.** The bottom frame **2** is made in the same manner as the top frame **1.** The bottom frame **2** is comprised of a plurality of bottom frame elements **21,** having an endless locating groove **211** at the top side. According to this embodiment, the top frame **1** is comprised of two smoothly curved top frame elements **11,** and the bottom frame **2** is comprised of two smoothly curved bottom frame elements **21.**

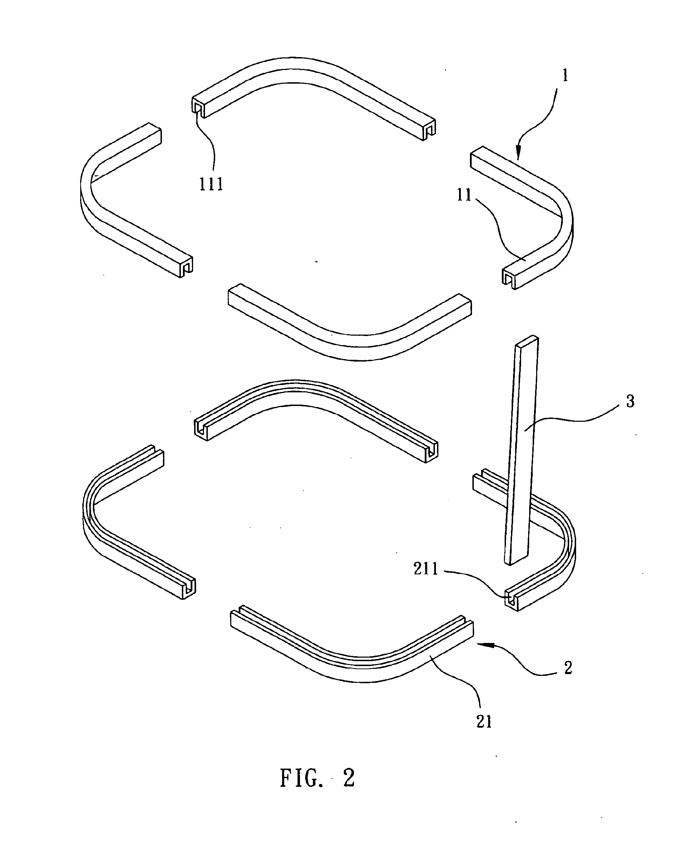

FIG. 2 shows the basic structure of a bamboo container. This embodiment is substantially similar to the aforesaid first embodiment with the exception that the top frame **1** is comprised of four smoothly curved top frame elements **11,** and the bottom frame elements **2.is** comprised of four smoothly curved bottom frame elements **21.**

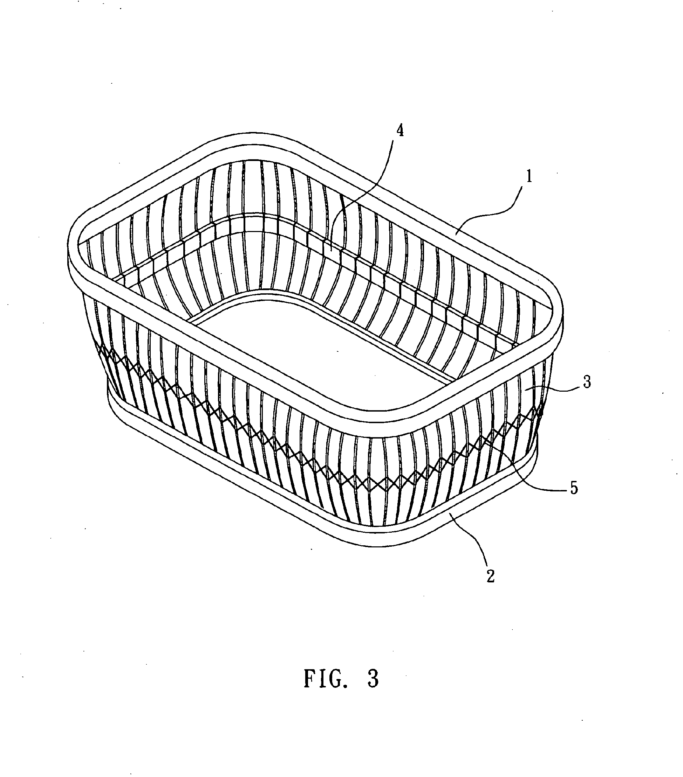

FIG. 3 is an elevational view of a bamboo container of a first embodiment of the present invention. According to this embodiment, the bamboo container is comprised of a relatively bigger top frame **1,** a relatively smaller bottom frame **2,** a plurality of bamboo slats **3** vertically connected between the top frame **1** and the bottom frame **2,** a reinforcing middle frame **4** attached to the bamboo slats **3** and spaced between the top frame **1** and the bottom frame **2,** and cord members **5** fastened to the bamboo slats **3** and the reinforcing middle frame **4** to affix the reinforcing middle frame **4** to the bamboo slats **3.** According to this embodiment, the bamboo slats **3** are smoothly arched slats. After installation, the bamboo slots **3** are curved outwards toward the outside of the bamboo container.

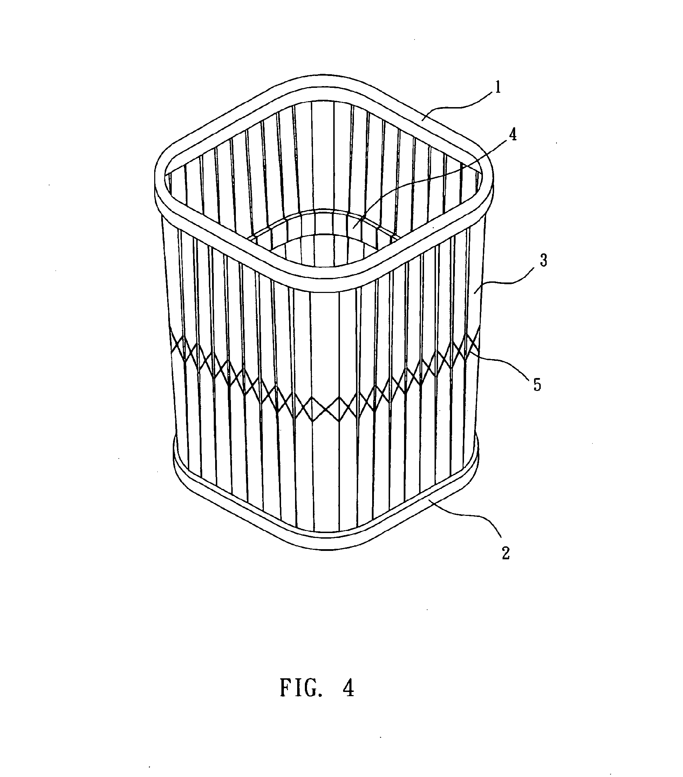

FIG. 4 is an elevational view of a bamboo container of a second embodiment of the present invention. According to this embodiment, the bamboo container is comprised of a relatively bigger top frame **1,** a relatively smaller bottom frame **2,** a plurality of bamboo slats **3** vertically connected between the top frame **1** and the bottom frame **2,** a reinforcing middle frame **4** attached to the bamboo slats **3** and spaced between the top frame **1** and the bottom frame **2,** and cord members **5** fastened to the bamboo slats **3** and the reinforcing middle frame **4** to affix the reinforcing middle frame 4 to the bamboo slats **3.** According to this embodiment, the bamboo slats **3** are long straight slats. After installation, the bamboo container shows a hollow conical configuration.

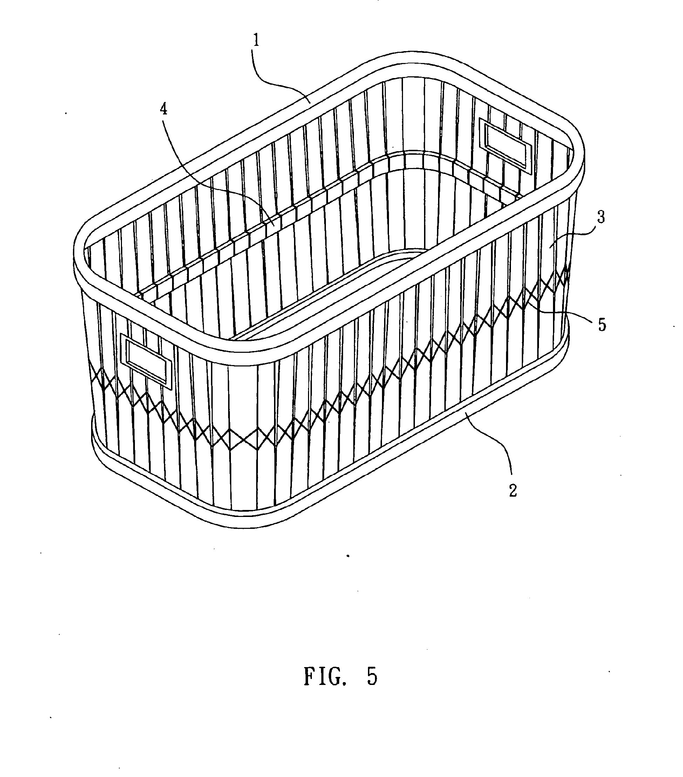

FIG. 5 is an elevational view of a bamboo container of a third embodiment of the present invention. According to this embodiment, the bamboo container is comprised of a relatively bigger top frame **1,** a relatively smaller bottom frame **2,** a plurality of bamboo slats **3** vertically connected between the top frame **1** and the bottom frame **2,** a reinforcing middle frame **4** attached to the bamboo slats **3** and spaced between the top frame **1** and the bottom frame **2,** and cord members **5** fastened to the bamboo slats **3** and the reinforcing middle frame **4** to affix the reinforcing middle frame **4** to the bamboo slats **3.** According to this embodiment, the bamboo slats **3** are short straight slats. After installation, the bamboo container shows the shape of a hollow rectangular conical container.

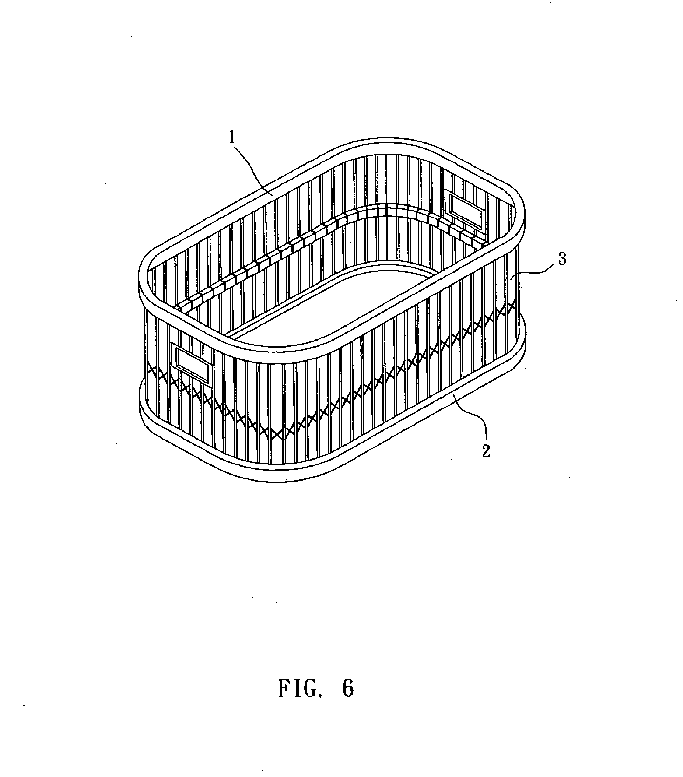

FIG. 6 is an elevational view of a bamboo container of a fourth embodiment of the present invention. This embodiment is substantially similar to the aforesaid third embodiment with the exception that the top frame **1** and the bottom frame **2** of this fourth embodiment have the same size.

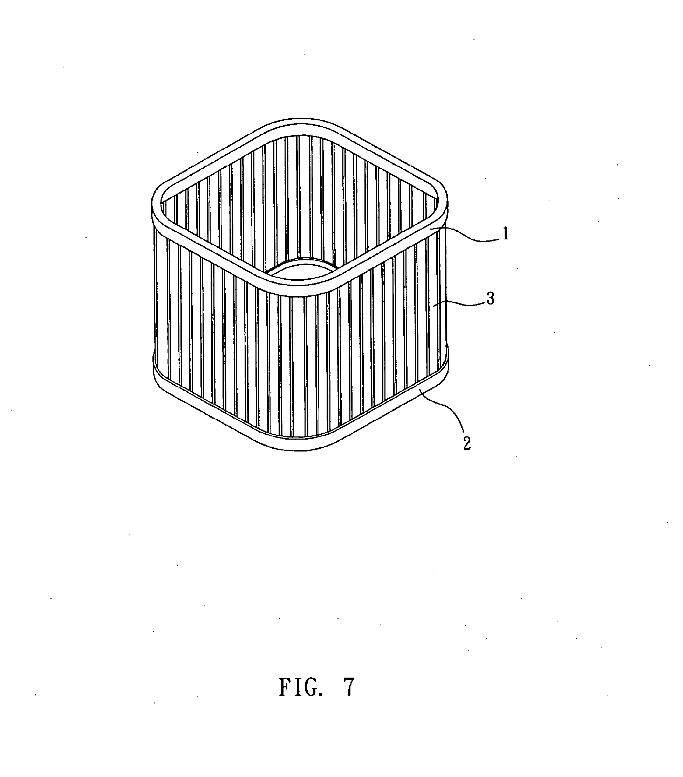

FIG. 7 is an elevational view of a bamboo container of a fifth embodiment which does not form part of the present invention. According to this embodiment, the bamboo container is comprised of a top frame **1,** a bottom frame **2,** and a plurality of bamboo slats **3** vertically connected between the top frame **1** and the bottom frame **2.** According to this embodiment, the bamboo slats **3** are straight slats; the top frame **1** and the bottom frame **2** are square open frames having a same diameter.

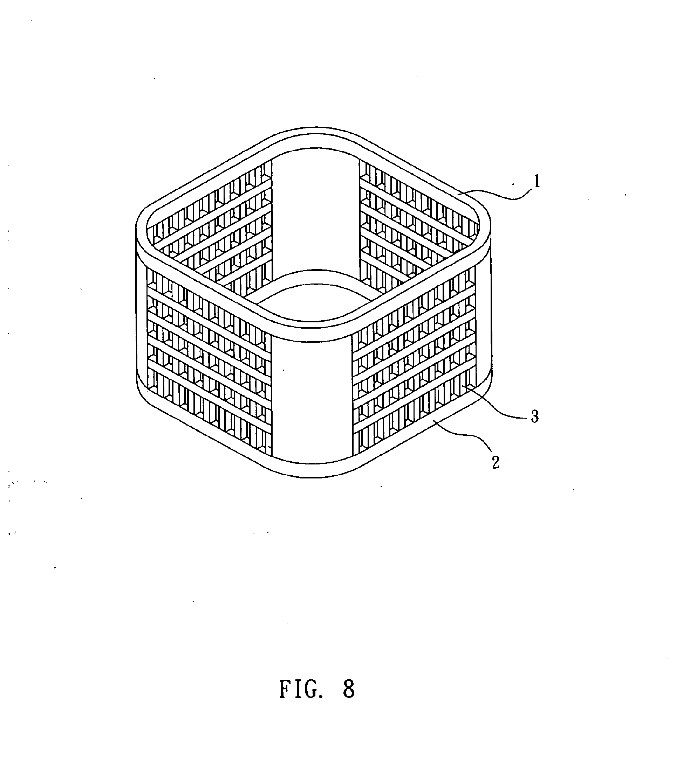

FIG. 8 is an elevational view of a bamboo container of a sixth embodiment which does not form part of the present invention. According to this embodiment, the bamboo container is comprised of a relatively bigger top frame **1**, a relatively smaller bottom frame **2,** and a plurality of bamboo slats **3** vertically connected between the top frame **1** and the bottom frame **2.** According to this embodiment, the bamboo slats **3** are latticed intersected, and then the latticed intersected bamboo slat structure is connected between the top frame **1** and the bottom frame **2.**

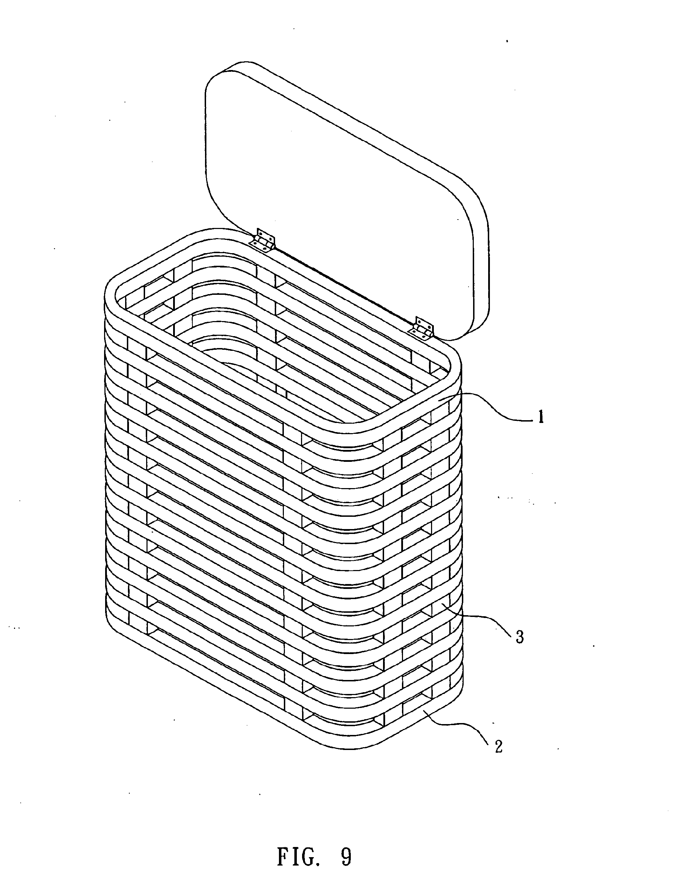

FIG. 9 is an elevational view of a bamboo container of a seventh embodiment which does not form part of the present invention. According to this embodiment, the bamboo container is comprised of a bottom frame **2,** a plurality of top frames **1,** and a plurality of bamboo slats **3** respectively fastened to the bottom frame **2** and the top frames **1** to hold the top frames **1** and the bottom frame **2** in parallel at different elevations.

A prototype of bamboo container has been constructed with the features of FIGS. 1~9. The bamboo container functions smoothly to provide all of the features discussed earlier.

Although particular embodiments of the inventions have been described in detail for purposes of illustration, various modifications and enhancements may be made without departing from the scope of the invention as defined by appended claims.

## Claims

1. A bamboo container comprising:
a bottom open frame (2), said bottom open frame (2) comprising a plurality of frame elements (21) continuously connected to one another in series;
a top open frame (1), said top open frame comprising a plurality of top frame elements (11) continuously connected to one another in series;
a plurality of bamboo slats (3) connected between said top open frame (1) and said bottom open frame (2),
a reinforcing middle open frame (4) attached to said bamboo slats (3) at an inner side and spaced between said top open frame (1) and said bottom open frame (2); and
fastening means (5) fastened to said bamboo slats (3) and said reinforcing middle open frame (4) to affix said reinforcing middle open frame (4) and said bamboo slats (3) together;
**characterized by** said bottom open frame (2) defining an endless locating groove (211) in a top side thereof, said top open frame (1) defining an endless locating groove (111) in a bottom side thereof and said bamboo slats (3) each having a top end engaged into the endless locating groove (111) of said top open frame (1) and a bottom end engaged into the endless locating groove (211) of said bottom open frame (2).

2. The bamboo container as claimed in claim 1, wherein said bottom frame elements (21) and said top frame elements (11) each have a U-shaped cross section.

3. The bamboo container as claimed in claim 1, wherein said bottom frame elements (21) and said top frame elements (11) are smoothly arched.

4. The bamboo container as claimed in claim 1, wherein said fastening means (5) is a cord member.

## Patentansprüche

1. Bambusbehälter mit:
einem unteren offenen Rahmen (2) mit einer Vielzahl von Rahmenelementen (21), die fortlaufend der Reihe nach miteinander verbunden sind;
einem oberen offenen Rahmen (1) mit einer Vielzahl von oberen Rahmenelementen (11), die fortlaufend der Reihe nach miteinander verbunden sind; einer Vielzahl von Bambusleisten (3), die zwischen dem oberen offenen Rahmen (1) und dem unteren offenen Rahmen (2) verbunden sind,
einem verstärkenden mittleren offenen Rahmen (4), der an den Bambusleisten (3) an einer Innenseite angebracht und zwischen dem oberen offenen Rahmen (1) und dem unteren offenen Rahmen (2) beabstandet ist; und
einem Befestigungsmittel (5), das an den Bambusleisten (3) und dem verstärkenden mittleren offenen Rahmen befestigt ist, um den verstärkenden mittleren offenen Rahmen (4) und die Bambusleisten (3) aneinander zu befestigen;
**gekennzeichnet dadurch, dass**
der untere offene Rahmen (2) eine endlose Aufnahmenut (211) in einer Oberseite davon definiert, der obere offene Rahmen (1) eine endlose Aufnahmenut (111) in einer Unterseite davon definiert und die Bambusleisten (3) jeweils ein oberes Ende, das sich im Eingriff mit der endlosen Aufnahmenut (111) des oberen offenen Rahmens (1) befindet, und ein unteres Ende aufweisen, das sich im Eingriff mit der endlosen Aufnahmenut (211) des unteren offenen Rahmens (2) befindet.

2. Bambusbehälter nach Anspruch 1, bei dem die unteren Rahmenelemente (21) und die oberen Rahmenelemente (11) jeweils einen U-förmigen Querschnitt aufweisen.

3. Bambusbehälter nach Anspruch 1, bei dem die unteren Rahmenelemente (21) und die oberen Rahmenelemente (11) gleichmäßig gekrümmt sind.

4. Bambusbehälter nach Anspruch 1, bei dem das Befestigungsmittel (5) ein Schnurelement ist.

## Revendications

1. Conteneur de bambou comprenant :
un cadre inférieur ouvert (2), ledit cadre inférieur ouvert (2) comprenant une pluralité d'éléments de cadre (21) reliés continument les uns aux autres, en série ;
un cadre supérieur ouvert (1), ledit cadre supérieur ouvert comprenant une pluralité d'éléments de cadre supérieur (11) reliés continument les uns aux autres, en série ;
une pluralité de lattes de bambou (3) reliées entre ledit cadre supérieur ouvert (1) et ledit cadre inférieur ouvert (2),
un cadre central de renfort ouvert (4) attaché auxdites lattes de bambou (3) sur un côté intérieur et espacé entre ledit cadre supérieur ouvert (1) et ledit cadre inférieur ouvert (2) ; et
des moyens de fixation (5) fixés auxdites lattes de bambou (3) et audit cadre central de renfort ouvert (4) pour fixer ensemble ledit cadre central de renfort ouvert (4) et lesdites lattes de bambou (3) ;
**caractérisé en ce que** ledit cadre inférieur ouvert (2) définit une gorge sans fin de positionnement (211) dans un côté supérieur de celui-ci, ledit cadre supérieur ouvert (1) définissant une gorge sans fin de positionnement (111) dans un côté inférieur de celui-ci et lesdites lattes de bambou (3) ayant chacune une extrémité supérieure en prise dans la gorge sans fin de positionnement (111) dudit cadre supérieur ouvert (1) et une extrémité inférieure en prise dans la gorge sans fin de positionnement (211) dudit cadre inférieur ouvert (2).

2. Conteneur de bambou tel que revendiqué dans la revendication 1, dans lequel lesdits éléments de cadre inférieur (21) et lesdits éléments de cadre supérieur (11) ont chacun une section transversale en forme de U.

3. Conteneur en bambou tel que revendiqué dans la revendication 1, dans lequel lesdits éléments de cadre inférieur (21) et lesdits éléments de cadre supérieur (11) sont arqués sans à-coups.

4. Conteneur de bambou tel que revendiqué dans la revendication 1, dans lequel lesdits moyens de fixation (5) sont un organe de corde.
